# FASCICULE DE BREVET EUROPEEN

(11) **EP 0 829 343 B1**
(45) Date de publication et mention de la délivrance du brevet: **27.02.2002**
(21) Numéro de dépôt: 97402104.0
(22) Date de dépôt: 10.09.1997
(51) Int. Cl.: B32B 17/10, C03C 27/12

(54) **Vitrage feuilleté muni de patins de compression**
Verbundverglasung mit Abstandshalter
Laminated glazing including spacers

(30) Priorité: 12.09.1996 FR 9611141
(43) Date de publication de la demande: 18.03.1998
(73) Titulaire: Glaverbel France S.A., 92800 Puteaux (FR)
(72) Inventeur: Legrand, Denis, c/o PPG Industries Glass S.A., La Défense 8, 92800 Puteaux (FR); Savaete, Bernard, c/o PPG Industries Glass S.A., La Défense 8, 92800 Puteaux (FR); Singer, André, c/o PPG Industries Glass S.A., La Défense 8, 92800 Puteaux (FR)
(74) Mandataire: Le Vaguerèse, Sylvain Jacques

(56) Documents cités:
- EP-A- 0 307 280
- GB-A- 2 289 649

## Description

L'invention concerne le domaine des vitrages feuilletés.

Citons dans ce domaine, les documents suivants.

Le document DE-A-38 37 701 décrit une vitre pourvue de perçages dans lesquels un adhésif est introduit pour une liaison.

Le document GB-A-2 024 297 décrit une vitre avec un rail ayant une section en forme de U. sur lequel des boulons de fixation sont soudés.

Le document US-A-4 307 551, décrit des plaques en verre pour des revêtements de paroi, comprenant des rails profilés collés dans la zone des bords.

Le document EP-A-344 486 décrit une plaque de verre épaisse de revêtement et une tôle métallique collée.

Dans un vitrage feuilleté, le matériau des éléments d'enveloppe est en général un verre, une matière synthétique ou analogues, tandis que le ou les éléments déformables sont le plus souvent en matière synthétique dite thermoplastique, sous forme de feuilles.

Ces éléments sont dits déformables car ils présentent une aptitude à subir des déformations plastiques irréversibles, couramment appelées "fluage".

Une augmentation de température, par exemple sous l'effet du soleil accroît le fluage.

En particulier, sous certaines conditions de température et/ou de contrainte, ces éléments sont déformés du fait de leur résilience faible. Ainsi, ils ne retrouvent pas leur forme d'origine une fois que les conditions ont disparu.

Par exemple, l'application sur un vitrage feuilleté, de contraintes telles qu'une compression visant au maintien dans une position de ce vitrage, provoque souvent un fluage.

Cela engendre une détérioration mécanique et une altération de l'étanchéité du vitrage et/ou de l'ensemble auquel il est intégré.

La détérioration mécanique apparaît comme une modification géométrique du vitrage (délamination, épaisseur etc.).

Et quand cela survient, le maintien et/ou l'entraînement correct du vitrage sont altérés. Notamment, la solidarisation du vitrage avec des moyens de maintien et/ou d'entraînement est alors imparfaite (jeux, vibrations, blocages, etc.), voire rompue.

Les solutions industrielles sont insatisfaisantes actuellement, notamment du fait de leur coût.

Il est courant de prévoir sur le vitrage pour sa solidarisation aux moyens de maintien et/ou entraînement, des discontinuités débouchant à deux faces opposées suivant la direction principale des contraintes. Il s'agit généralement de regards, lumières ou perçages.

Cela fragilise le vitrage et en augmente le coût. Egalement, les moyens solidarisés au vitrage sont alors pesants, ce qui est contraire aux voeux d'allégement de l'industrie.

Le même inconvénient de poids se retrouve avec les moyens solidarisés par enserrement du vitrage à l'aide d'un étrier.

Un insert à section transversale en "U", par exemple en caoutchouc ou analogues, enserre généralement un bord du vitrage et est rigidement lié à l'étrier. L'encombrement, la fiabilité et la simplicité de l'ensemble comportant le vitrage en pâtit.

Ces inconvénients sont d'autant plus handicapants que les exigences de l'industrie en matière d'acoustique, de réduction des poids et encombrement, de sécurité et fiabilité (résistance d'assemblage aux chocs et aux conditions de chaleur ou humidité, etc.) sont croissantes.

En outre, il convient de limiter, voire d'éliminer, les rebuts à la production tels que délamination, défauts ou casse, par exemple dus à un assemblage final en autoclave ( souvent à 1,2 MPa et 145°C durant plus d'une heure).

Egalement, des délaminations peuvent apparaître au montage ou lors du cycle de vieillissement, et sans pouvoir être remarquées lors de l'assemblage, qui en est une cause.

Ces problèmes exposés dans le cas d'un vitrage feuilleté sont liés au fait de devoir appliquer des contraintes de compression, depuis l'extérieur, sur un dispositif comportant une enveloppe dure et fragile ainsi qu'un "coeur souple". On parle aussi de "résilience faible".

L'objet de l'invention est un vitrage feuilleté comprenant un ensemble d'au moins une feuille transparente dure , et au moins une feuille dite intercalaire, intercalaire qui est déformable par compression, dans lequel un ou plusieurs patins de compression sont disposés localement aux emplacements du vitrage destinés à être soumis à compression dans le sens de l'épaisseur, le ou les patins de compression d'épaisseur sensiblement égale à celle à maintenir pour l'intercalair après assemblage, étant d'un matériau plus résistant à la compression que celui de l'intercalaire.

De façon préférée le vitrage feuilleté selon l'invention comprend un ensemble d'au moins deux feuilles transparentes, et au moins un intercalaire entre ces deux feuilles, et le ou les patins de compression sont d'épaisseur sensiblement égale à la distance à maintenir entre les deux feuilles après qu'elles ont été assemblées au moyen de l'intercalaire.

Le vitrage feuilleté peut être obtenu par la combinaison d'étapes prévoyant de:
* disposer au moins un premier élément d'enveloppe (feuille transparente) dans une position d'assemblage, avec au moins une première surface d'assemblage accessible;
* disposer au moins un élément déformable (intercalaire) avec une première surface d'assemblage en regard de la première surface d'assemblage et une deuxième surface intermédiaire d'assemblage accessible, cet élément déformable étant pourvu d'au moins un patin de compression et/ou d'au moins un dégagement de réserve;
* éventuellement placer dans ce dernier au moins un patin de compression rapporté, en regard de la surface d'assemblage du premier élément d'enveloppe (feuille transparente);
* disposer au moins un deuxième élément d'enveloppe avec au moins une surface d'assemblage en regard d'au moins une surface d'assemblage d'un élément déformable et/ou d'au moins un patin de compression; et
* effectuer un traitement de liaison de sorte qu'au moins un patin de compression ait sa première surface d'assemblage en contact avec celle du premier élément d'enveloppe (feuille transparente), et qu'une deuxième surface d'assemblage d'un patin de compression soit en contact avec celle du deuxième élément d'enveloppe (feuille transparente).

On obtient ainsi un pont continu - avec un ou plusieurs patins contigus - entre les éléments d'enveloppe (feuille transparente), à forte résistance en taux de compression, permettant d'absorber les contraintes sans solliciter l'assemblage.

Dans un procédé mis en oeuvre, l'étape de traitement de liaison comporte une opération de transformation mécanique telle que déformation par exemple par pressage d'au moins un patin et/ou physique telle que dépressurisation ou mise sous vide.

Selon une mise en oeuvre, l'étape de traitement de liaison comporte une opération de transformation chimique telle que polymérisation, solidification et/ou séchage.

Le procédé prévoit selon une mise en oeuvre, que l'étape de traitement de liaison comporte une opération de chauffage par exemple en four à sac, et/ou d'étuvage.

Selon une caractéristique, le procédé comporte plusieurs étapes consistant à:
* disposer au moins un élément déformable (intercalaire) avec une première surface d'assemblage en regard d'une première ou deuxième surface d'assemblage; et
* éventuellement placer dans un dégagement de réserve au moins un patin de compression rapporté.

L'assemblage du vitrage feuilleté peut comporter la mise en oeuvre d'une installation comprenant des moyens choisis parmi : chambre blanche et/ou système de convoyage et/ou système de chauffage, tel que four à sac, et/ou système de pressage à galets.

L'installation est pourvue de moyens programmables tels que détecteur ou automate, de contrôle d'état d'accomplissement d'étapes ou d'opération et/ou aptes à effectuer ces dernières automatiquement au moins en partie.

Dans le vitrage feuilleté préféré selon l'invention, au moins un patin de compression, agencé entre les feuilles transparentes, est dans un matériau dont la dureté est sensiblement inférieure ou égale à celle des feuilles transparentes avec lesquelles il est en contact et supérieure à celle de l'élément déformable (intercalaire), à la température du traitement de liaison au moins. La dureté Vickers ou Brinell du patin est par exemple de l'ordre de 600 à 800.

Dans un mode de réalisation, au moins un patin de compression comprend un matériau choisi parmi: matière synthétique telle qu'aramide et/ou polyvinyle butyral, et/ou verre, et/ou un métal tel que plomb et/ou étain, ce matériau étant éventuellement fibreux et par exemple lié à l'élément déformable par couture.

Selon une caractéristique, au moins un patin de compression et/ou un élément déformable comprend une partie opaque et/ou translucide et/ou teintée.

Un exemple de vitrage feuilleté prévoit qu'au moins un patin de compression et/ou un élément déformable présente une dimension suivant la direction des contraintes de destination, sensiblement égale à la distance entre les surfaces d'assemblage avec lesquelles il est en regard, préalablement à l'étape de traitement de liaison, cette dimension étant sensiblement égale à la distance dans le vitrage achevé.

Selon une caractéristique, au moins un patin de compression et/ou un élément déformable et/ou un élément d'enveloppe est sensiblement en forme de feuillet, par exemple plan, bombé ou complexe.

On cherche à donner au patin une forme évitant de "blesser" l'élément d'enveloppe (feuille transparente) à l'assemblage.

Dans un mode de réalisation, au moins un patin de compression et/ou une feuille transparente, ou le vitrage, est dépourvu de discontinuité débouchant à deux surfaces d'assemblage opposées suivant la direction des contraintes de destination, par exemple regard, lumière ou perçage.

Le matériau transparent est par exemple du verre ou une matière synthétique telle que le polyéthylène.

Une autre caractéristique prévoit qu'au moins un patin de compression est localisé dans une zone de compression et/ou délimite un motif, dans un plan d'assemblage et/ou en section transversale, de polyèdres, lignes ou cercles.

L'intercalaire utilisé pour l'assemblage peut être constitué par au moins un adhésif fluide et/ou en film, éventuellement thermodurcissable.

Un autre objet de l'invention est un ensemble comportant un vitrage feuilleté tel qu'évoqué plus haut.

Cet ensemble comprend des moyens de maintien et/ou entraînement, par exemple par pincement, coopérant avec le vitrage feuilleté en regard d'au moins un patin de compression, ces moyens participant à la solidarisation du vitrage feuilleté à l'ensemble, et éventuellement à son entraînement entre deux positions .

Dans un mode de réalisation, l'ensemble comporte un passage, éventuellement pourvu de moyens d'étanchéité, tous les patins de compression du vitrage étant étendus exclusivement d'une part du passage, quelle que soit la position du vitrage, l'ensemble étant par exemple un organe de carrosserie de véhicule tel qu'une porte.

L'invention est précisée dans la description détaillée qui suit de modes de réalisation des dessins annexés définis maintenant, auxquels la description se réfère.

La figure 1 est une vue partielle en coupe transversale d'élévation d'un organe de carrosserie de véhicule, formant un ensemble selon l'invention, pourvu d'un vitrage feuilleté formant dispositif selon l'invention, et de moyens de maintien et d'entraînement avec un insert.

La figure 2 est une vue partielle en perspective d"un vitrage feuilleté selon l'invention et comportant une feuille unique, un élément déformable lié à la feuille unique et des patins de compression intégrés à l'élément déformable durant son assemblage avec la feuille. On appelle parfois de tels éléments assemblés "bi-layer".

La figure 3 est une vue de face en élévation, d'un vitrage avec un patin de compression en forme de bande inférieure étendue de bord à bord longitudinalement, de hauteur limitée, et éventuellement adhésive.

La figure 4 est une vue similaire à la figure 1, en section suivant la ligne IV-IV de la figure 3.

La figure 5 est une vue partielle en section suivant le plan transversal V de la figure 2, avec un patin de compression à forme d'aide à la pénétration et de verrouillage.

La figure 6 est une vue similaire à la figure 1, d'un dispositif où les patins sont étendus entre deux feuillets formant l'élément déformable, cet élément étant livré avec les patins intégrés et comportant deux feuillets.

La figure 7 est une vue similaire à la figure 2, qui illustre un dispositif où les patins en forme discontinue, par exemple cercles ou points, sont intégrés à l'élément déformable, par exemple par couture.

La figure 8 est une vue agrandie d'un détail de la figure 6.

La figure 9 est une vue similaire à la figure 7, avec des patins en motif composés de lignes.

La figure 10 est une vue similaire à la figure 8, montrant un détail de la figure 9 suivant la ligne IX-IX, où est visible une partie d'installation d'assemblage.

La figure 11 est une vue similaire à la figure 9, avec des patins rectangulaires.

Et la figure 12 est une vue similaire à la figure 4, suivant la ligne XII-XII de la figure 11.

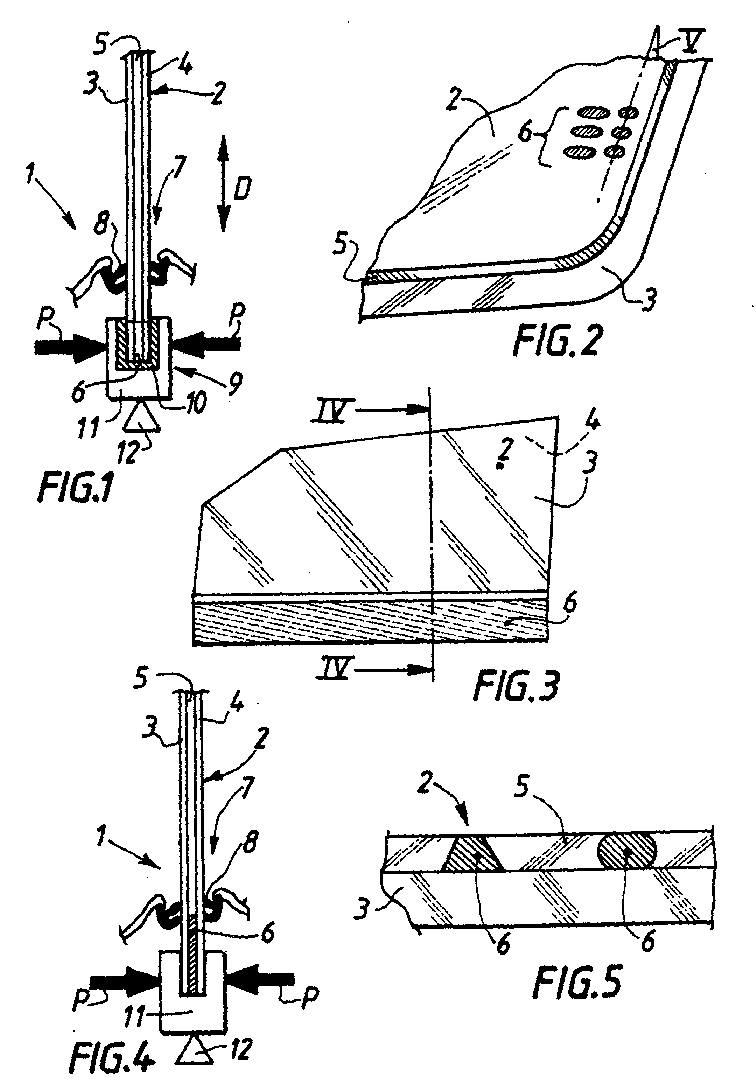

Pour les exemples de la description, un ensemble 1 est représenté sur les figures 1, 4, 6 et 12.

Ici, l'ensemble 1 est un organe de carrosserie de véhicule, et en particulier une porte.

L'ensemble formant porte 1 comprend un dispositif 2 qui forme un vitrage feuilleté.

Sur les figures, sont représentés une première feuille transparente 3, une deuxième feuille transparente 4 et un élément déformable 5.

Les éléments 3, 4 et 5 font partie du dispositif 2, et donc de l'ensemble 1.

Des patins de compression sont représentés en 6 sur les figures. Ces patins font également partie du dispositif 2 et donc de l'ensemble 1.

La porte ou portière de l'ensemble 1 comprend un passage 7, à travers lequel est étendu le dispositif 2.

Considérons un plan médian de référence, suivant lequel est étendu de manière générale le dispositif 2. Ce plan médian est confondu avec le plan des feuilles sur les figures 3, 7, 9 et 11.

Sur les figures 1, 4, 6 et 12, le plan médian est généralement étendu suivant une direction perpendiculaire au plan de la feuille et de bas en haut de cette dernière.

Considérons également un plan dit longitudinal. Le plan longitudinal est un plan de référence étendu perpendiculairement au plan médian, et parallèlement à une direction dite longitudinale, perpendiculaire au plan de la feuille sur les figures 1, 4, 6, 8, 10 et 12.

Sur les figures 3, 9 et 11, le plan longitudinal est confondu avec le plan de la feuille et étendu perpendiculairement aux droites VI, IX et XII respectivement.

Considérons en outre un plan de référence dit transversal. Il s'agit du plan de coupe sur les figures 1, 4, 6, 8, 10 et 12.

Le plan transversal est étendu perpendiculairement aux plans de référence longitudinaux et médians. Ces trois plans longitudinal, médian et transversal sont mutuellement perpendiculaires.

En revenant à l'ensemble formant porte 1, notons que le passage 7 est sensiblement étendu suivant le plan longitudinal.

Le passage 7 comporte des moyens d'étanchéité 8, ici des joints à lèvres en caoutchouc, généralement étendus suivant le plan longitudinal.

Chacun des deux joints des moyens d'étanchéité 8 est en contact d'une part avec un élément de la carrosserie formant support et d'autre part avec une feuille transparente 3 ou 4 respectivement.

La référence numérique 9 désigne sur les figures des moyens de maintien. Les moyens de maintien 9 comprennent un bloc ou "insert" 10 en matière souple telle que caoutchouc, qui présente une section en forme de U dans le plan transversal. Les branches du U enserrent les côtés du dispositif.

Le bloc 10 est lui-même disposé sur un support 11.

Les moyens 9 de maintien font aussi office de moyens d'entraînement du dispositif 2 par rapport au reste de l'ensemble 1 sur lequel il est monté, ou par rapport aux moyens d'étanchéité 8.

L'entraînement est obtenu suivant la direction D de la figure 1, parallèle aux plans transversal et médian.

En fait, le dispositif 2 est pincé par les moyens 9 suivant des efforts de compression P.

On note aussi des moyens moteur 12, par exemple manuels ou mécaniques, qui permettent d'obtenir le déplacement suivant la direction D.

Le déplacement suivant la direction D est dans le cas d'une vitre, prévu entre deux positions, l'une complètement levée, l'autre complètement baissée.

Notons que par rapport au passage 7 et aux moyens d'étanchéité 8, tous les patins de compression 6 du dispositif 2 sont étendus exclusivement d'une part. Autrement dit, les patins 6 sont situés d'un seul côté des moyens d'étanchéité 8, par rapport à un plan parallèle au plan longitudinal et étendu au niveau du passage 7.

Notons que cet agencement se retrouve quelle que soit la position du dispositif 2, ce qui rend les patins de compression 6 invisibles dans le cas où le passage 7 débouche vers l'extérieur.

Avant de décrire le dispositif 2, considérons de manière générale la fabrication d'un vitrage feuilleté.

On a vu qu'un vitrage feuilleté comprend principalement au moins deux éléments d'enveloppe 3 et 4 (feuilles transparentes), ainsi qu'au moins un élément (intercalaire) déformable 5 entre ces éléments d'enveloppe.

Dans la pratique, la feuille 3 est destinée à être orientée vers l'intérieur lors de l'utilisation du dispositif 2. Tandis que la feuille 4 est destinée à être vers l'extérieur.

Pour la réalisation du dispositif 2, les feuilles 3, 4 sont réalisées à partir de plaques de verre dites "primitifs".

On prévoit des épaisseurs de verre utilisées, par exemple, de 2mm-2mm ; 3mm-2mm ; 6mm-3mm pour respectivement la feuille extérieure 4 et la feuille intérieure 3.

Les primitifs subissent des opérations de découpe et de façonnage, considérées comme initiales pour plus de simplicité.

Ces opérations sont effectuées en plaçant l'un sur l'autre les primitifs de feuille extérieure 4 et intérieure 3, pour obtenir des découpes et façonnages sensiblement identiques.

On prévoit ensuite une opération de sérigraphie ou d'application d'un émail sans plomb sur l'une des faces du primitif destiné à être en regard avec l'autre.

La sérigraphie peut comprendre par exemple la marque du fabricant de verre, un code barre d'identification ou une antenne.

Généralement, est effectuée ensuite une opération de poudrage avec un carbonate de calcium de granulométrie de quelques microns. Ce poudrage est effectué très généralement s'ur la face de primitif opposée et en regard à celle sur laquelle a été effectuée l'opération de sérigraphie.

Dans certaines réalisations, le carbonate de calcium est remplacé par une terre diatomée.

Suit alors une opération d'apérage qui consiste à effectuer un centrage alterné des deux primitifs.

Est généralement prévu ensuite une opération de chauffage, par exemple au four.

Dans des installations, le chauffage est effectué au défilé à des températures de l'ordre de 650°C à 750°C selon la forme, l'épaisseur et les caractéristiques à obtenir du vitrage.

On prévoit alors un refroidissement. Cette opération implique de maîtriser les tensions de bords et les résultats corrects des verres en photoélastimétrie.

On procède alors à des opérations de lavage, séchage et refroidissement final, pour que la température des primitifs soit sensiblement inférieure ou égale à celle de l'élément déformable 5.

Intervient alors le procédé d'assemblage qui sera décrit plus loin.

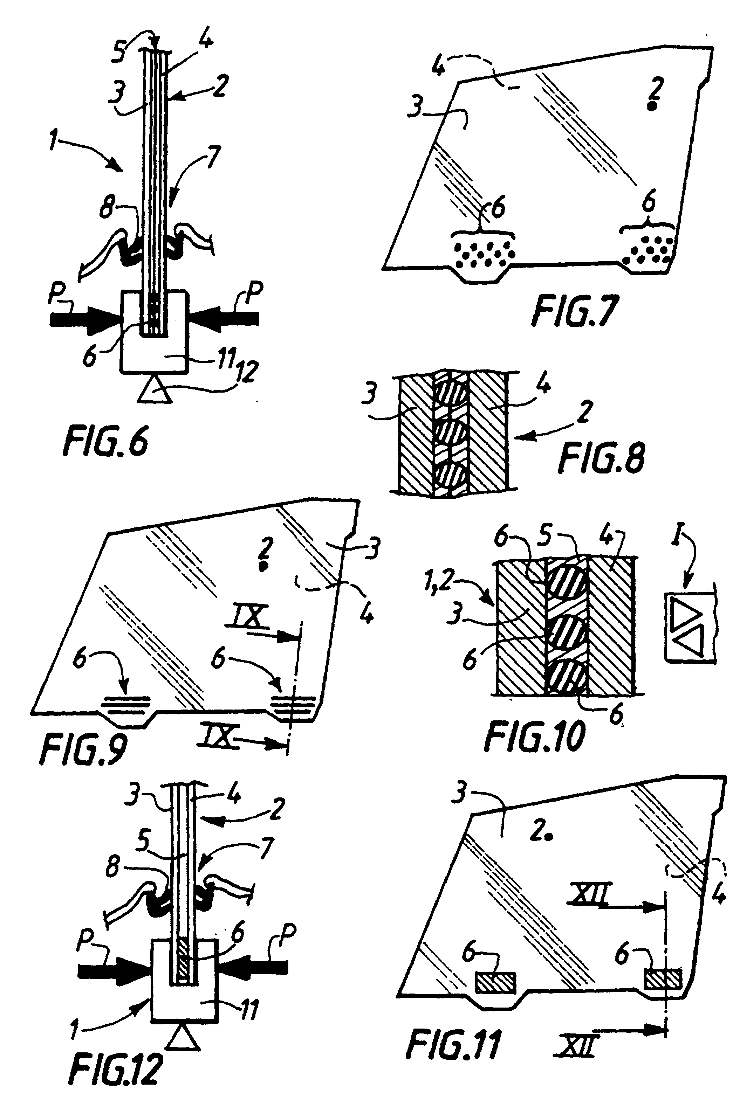

Notons que de manière générale, une installation I (figure 10) d'assemblage d'au moins deux éléments d'enveloppe (feuilles) 3, 4 et d'au moins un élément déformable (intercalaire) 5 entre les deux éléments d'enveloppe 3, 4 vise à rendre ces éléments 3, 4 et 5 rigidement solidaires de façon irréversible.

Une telle installation est pourvue dans la plupart des cas de moyens programmables tels que détecteurs ou automates.

Egalement on équipe le plus souvent les installations I, de moyens de contrôle d'état d'accomplissement d'étapes d'opération.

Des moyens aptes à effectuer automatiquement - au moins en partie - des étapes ou opérations font également partie de la plupart des installations I.

Notons que selon les installations I, ces dernières comportent des moyens choisis parmi : chambre blanche et/ou système de chauffage, par exemple four à sac et/ou système de pressage à galets.

Rappelons que le procédé d'assemblage permet de rendre les éléments 3, 4 et 5 rigidement solidaires de façon irréversible.

Ce procédé est destiné à des éléments assemblés 3, 4, 5 destinés à être soumis à des contraintes de compression P. Ici, la direction des contraintes de compression P est sensiblement perpendiculaire au plan de référence médian.

En tout état de cause, les contraintes de compression P sont sécantes à ce plan.

On comprend également que du fait de la structure du dispositif 2, les surfaces d'assemblage entre les éléments d'enveloppe (feuilles) 3, 4 et l'élément déformable (intercalaire) 5 sont au moins en certains endroits parallèles au plan de référence médian. De fait, les orientations respectives des contraintes de compression P par rapport à ce plan s'appliquent également aux surfaces d'assemblage.

Le procédé prévoit les étapes consistant à :
- disposer au moins un premier élément 3 d'enveloppe (feuille) dans une position d'assemblage, avec au moins une première surface d'assemblage accessible ;
- disposer au moins un élément déformable (intercalaire) 5 avec une première surface d'assemblage en regard de la première surface d'assemblage, et une deuxième surface intermédiaire d'assemblage accessible, cet élément déformable 5 étant pourvu d'au moins un patin de compression et/ou au moins un dégagement de réserve ;
- éventuellement est placé dans ce dernier au moins un patin de compression 6 rapporté, en regard de la surface d'assemblage du premier élément d'enveloppe 3 ;
- disposer au moins un deuxième élément d'enveloppe (feuille) 4 avec au moins une surface d'assemblage en regard d'au moins une surface d'assemblage d'un élément déformable (ici 3) et/ou d'au moins un patin de compression 6 ; et
- effectuer un traitement de liaison de sorte qu'au moins un patin de compression 6 et sa première surface d'assemblage en contact avec celle du premier élément d'enveloppe 3, et une deuxième surface d'assemblage d'un patin de compression 6 en compression avec celle du deuxième élément d'enveloppe 4.

Il est courant que l'assemblage soit effectué en chambre blanche, sur un système de transport des éléments 3 et 4 provenant de l'opération de lavage évoquée plus haut.

On pose sur l'élément externe 3 l'élément déformable 5, puis on recouvre cet élément déformable 5 par l'élément interne 4.

Du fait du système de convoyage, les trois éléments posés les uns sur les autres, comme décrits, sont amenés vers la partie de l'installation I destinée à effectuer le traitement de liaison.

Selon les cas, il s'agit d'un four à sac ou d'un système à galets.

Les éléments déformables 5 sont fréquemment découpés sous forme de rectangle, ou de trapèze, par exemple vingt-quatre heures avant l'assemblage.

On prévoit également une opération de pressage en deux points de l'empilement ou "sandwich" formé par les deux éléments d'enveloppe 3 et 4 entre lesquels est prévu l'élément déformable 5, et ce durant le transfert jusqu'au traitement de liaison.

Dans le cas d'un traitement de liaison effectué en four à sac, on vise un double objectif. Le premier est de dégazer et le second est d'obtenir une soudure des bords. Pour cela, on prévoit fréquemment un vide correspondant à 750 mm de hauteur de mercure.

La température dans le four à sac est, pour obtenir un scellement, généralement comprise entre 90 et 100°C.

Est fréquemment effectuée une pose d'embase telle que bloc ou insert. Pour ce faire, on emploie en général un polyvinyle butyral ou butyral polyvinylique (PVB).

Dans certaines mises en oeuvre, le polyuréthane (PU) a également montré certaines qualités.

De même, de manière plus générale, on prévoit des matériaux plastiques appropriés.

Les embases ou "inserts" sont pré-collées dans certains cas par exemple, par chauffage/collage par induction.

On prévoit également dans certaines réalisations la pose d'intercalaires pour une opération ultérieure de passage à l'autoclave. Un tel passage à l'autoclave a pour but d'homogénéiser toutes les surfaces et de rendre l'élément déformable 5 transparent et optiquement sans déformation.

Pour ce faire, le ramollissement ici du PVB et sa compression uniforme sont requis.

On utilise les deux éléments d'enveloppe 3 et 4 avec une pression en général de l'ordre de 1,2 MPa. Et ce, pendant plus d'une heure à une température de l'ordre de 145°C.

Sont effectués ensuite une visite optique, par exemple à l'aide d'une lampe à sodium avec un éclairage rasant, et un ébarbage des parties de l'élément déformable 5 dépassant des éléments d'enveloppe 4.

Une visite d'aspect est le plus souvent prévue alors.

On a vu que, selon les cas, le procédé d'assemblage prévoit une étape de traitement de liaison avec une opération de transformation chimique telle que polymérisation, solidification et/ou séchage.

Egalement, l'étape de traitement de liaison comporte dans certaines mises en oeuvre, une opération de chauffage, par exemple, en four à sac, en autoclave ou étuve.

Egalement, on peut réaliser suivant ce procédé des assemblages comportant successivement plusieurs couches d'éléments déformables 5 et d'éléments d'enveloppe 3 ou 4.

De même, il est possible dans un assemblage de juxtaposer, surface de contact contre surface de contact, soit plusieurs éléments d'enveloppe, soit plusieurs éléments déformables 5.

Un exemple de réalisation de ce type prévoit plusieurs étapes consistant à :
- disposer au moins un élément déformable 5 avec une première surface d'assemblage en regard d'une première ou deuxième surface d'assemblage ; et,
- éventuellement placer dans un dégagement de réserve au moins un patin de compression 6 rapporté.

A l'inverse, et comme illustré sur les figures 2 et 5, on peut aussi prévoir un assemblage de type "BI-LAYER".

Un tel assemblage comprend un élément unique d'enveloppe 3 auquel est assemblé un ou plusieurs éléments déformables 5.

On prévoit qu'au moins un patin de compression 6, agencé entre les éléments d'enveloppe 3, 4 - ou prévu entre un élément d'enveloppe et d'autres éléments pour appliquer une compression - est dans un matériau dont la dureté est sensiblement inférieure à celle des éléments d'enveloppe 3, 4, avec lesquels il est en contact.

Cette dureté est également supérieure à celle de l'élément deformable 5 à température de traitement de liaison au moins.

Par exemple la dureté Vickers ou Brinell du patin 6 est alors de l'ordre de 600 à 800.

Le choix des matériaux pour le patin de compression 6 est généralement effectué parmi : matière synthétique, dite thermoplastique, telle aramide et/ou polyvinyle butyral, et/ou verre, et/ou métal tel que plomb et/ou étain. Selon les applications, le même choix se retrouve pour le ou les éléments déformables 5.

Dans certaines réalisations, le matériau des patins de compression est fibreux.

Il peut par exemple être lié à l'élément déformable 5 par couture d'une telle fibre.

Selon l'exemple de la figure 3, le patin de compression 6 est entièrement opaque. Et l'élément déformable 5 est translucide et teinté.

En se reportant aux figures 8 et 10, on voit qu'au moins un patin de compression 6 - et similairement l'élément deformable 5 - présente une dimension suivant la direction des contraintes de destination, sensiblement égale à la distance entre les surfaces d'assemblage avec lesquelles il est en regard.

Cette dimension est dans certains cas legèrement supérieure, préalablement à l'étape de traitement de liaison. Et la dimension - comme sur les figures - est sensiblement égale à la distance dans le dispositif 2 achevé.

Dans la réalisation du dispositif 2, formant vitrage feuilleté, l'élément déformable 5 et/ou le patin 6 est en forme de feuillet.

On peut, par exemple, prévoir un feuillet d'une épaisseur de l'ordre de 0,76 mm. Ou alors deux feuillets d'une épaisseur de 0,38 mm chacun, entre lesquels sont interposés préalablement les patins 6, comme sur les figures 6 et 8.

En effet, le ou les patins 6 sont soit rapportés à l'assemblage, soit ils font partie intégrante d'un produit intermédiaire essentiellement constitué de l'élément déformable 5 et de ces patins 6.

On comprend bien maintenant comment, grâce à l'invention, il est possible de prévoir que le dispositif 2 soit dépourvu de discontinuité débouchant aux deux surfaces d'assemblage opposées suivant la direction des contraintes de compression.

Les coûts de fabrication d'un dispositif 2 sans lumière ou perçage sont nettement diminués. Et on peut résoudre des problèmes techniques liés à la compression d'un dispositif 2, tout en ménageant, voire en augmentant ses qualités mécaniques.

Pour le ou les éléments d'enveloppe 3, 4, on prévoit dans le cas d'un vitrage, un matériau transparent tel que verre ou matière synthétique de type polyéthylène ou analogue.

En se rapportant à la figure 3, on voit que le vitrage formant le dispositif 2 est pourvu d'un patin 6 unique en forme de bandeau étendu d'un bord à l'autre et sur une partie de la hauteur.

Sur les figures 2, 5, 7, 8 et 10, les patins 6 sont une pluralité de billes formant un motif dans les endroits devant coopérer avec les moyens de maintien 9.

Sur la figure 9, les patins de compression 6 sont une pluralité de lignes qui forment un motif.

Les motifs peuvent être, dans le plan de référence médian, ou dans un plan perpendiculaire transversal ou longitudinal, des polyèdres, des lignes ou des cercles.

Notons ici que peut être prévu un adhésif fluide et/ou en film, éventuellement thermodurcissable, entre deux éléments 3, 4, 5 ou 6.

Comme sur la figure 11 où les patins 6 sont en forme de rectangle, on comprend que la forme de ces patins dits "charge", doit permettre le fluage maîtrisé du feuillet de l'élément déformable 5 autour de ces patins lors de l'assemblage.

On détermine donc la forme des patins 6, notamment à cette fin, et selon la forme des moyens 9 de maintien qui opèrent comme une pince, destinée à coopérer avec le dispositif 2.

Le fait d'obtenir un patin de compression 6 discontinu d'un bord à un bord opposé du feuillet de l'élément déformable 5 permet d'éviter la séparation de ce dernier en plusieurs parties lors de l'assemblage.

De même lors de l'utilisation du dispositif 2.

Il est également souhaitable d'éviter à l'assemblage, le déplacement d'un patin de compression 6 par rapport à un autre patin 6.

Cela constitue un avantage des modes de réalisation où chaque patin 6 est au moins en partie entouré par l'élément déformable 5 dans le dispositif 2 fini.

Notons également que la forme du patin 6 peut être choisie pour faciliter la pénétration de celui-ci dans l'élément déformable lors de l'assemblage.

Tel est le cas du patin 6 de forme pyramidale tronquée sur la figure 5 à gauche.

Il en va de même pour la forme en "bille" représentée à droite, qui a également pour avantage d'obtenir le "blocage" du patin 6 dans l'élément déformable 5.

On comprend donc que l'invention permet la fabrication de dispositifs dépourvus de discontinuité tels que trou ou lumière ou d'autres formes, discontinuités destinées habituellement du fait qu'elles débouchent, à deux surfaces d'assemblage, à recevoir un mécanisme supportant une compression et permettant l'entraînement du dispositif.

Egalement l'isolation acoustique et/ou thermique est plus aisément obtenue selon l'invention.

Cette dernière trouve application au-delà du domaine des exemples, dans le bâtiment, les travaux publics, l'ameublement, les industries mécaniques notamment.

## Revendications

1. Vitrage feuilleté comprenant un ensemble d'au moins une feuille transparente dure (3,4), et au moins une feuille dite intercalaire (5), intercalaire qui est déformable par compression, dans lequel un ou plusieurs patins de compression (6) sont disposés localement aux emplacements du vitrage destinés à être soumis à compression dans le sens de l'épaisseur, le ou les patins de compression d'épaisseur sensiblement égale à celle à maintenir pour l'intercalaire (5) après assemblage, étant d'un matériau plus résistant à la compression que celui de l'intercalaire.

2. Vitrage feuilleté selon la revendication 1 comportant deux feuilles transparentes dures (3,4) assemblées au moyen de la feuille intercalaire (5), le ou les patins de compression étant d'une épaisseur sensiblement égale à la distance à maintenir entre les deux feuilles dures après que celles-ci aient été assemblées au moyen de l'intercalaire.

3. Vitrage feuilleté selon la revendication 1 ou 2, dans lequel le (ou les) patin(s) de compression (6), a (ont) une dureté inférieure à celle de la, ou des feuilles transparentes dures (3,4).

4. Vitrage selon l'une des revendications précédentes dans lequel la, ou les feuilles transparentes (3,4) sont des feuilles de verre, et le (les) patin(s) de compression présente(nt) une dureté Vickers ou Brinell de 600 à 800.

5. Vitrage feuilleté selon l'une des revendications 2 à 4, dans lequel l'intercalaire (5) est une feuille de polyninyl butyral (PVB).

6. Vitrage feuilleté selon l'une des revendications précédentes destiné à constituer un vitrage mobile d'un véhicule, dans lequel la compression dans l'épaisseur résulte de la fixation sur le bord du vitrage, de moyens (9) par l'intermédiaire desquels l'entraînement du vitrage est assuré.

7. Vitrage feuilleté selon la revendication 6, dans lequel le (les) patin(s) de compression (6) est (sont) localisé(s) sur la partie du vitrage mobile non visible quelle que soit la position, relevée ou abaissée, du vitrage.

8. Vitrage feuilleté selon l'une des revendications précédentes dans lequel le (les) patin(s) de compression (6) est (sont) disposé(s) dans un (des)dégagement(s) de réserve ménagé(s) dans l'intercalaire (5).

9. Vitrage selon l'une des revendications 1 à 7, dans lequel le (les ) patin(s) de compression (6) est (sont)insérés dans l'intercalaire (5) dans l'opération d'assemblage du vitrage feuilleté, la forme de ce(s) patin(s)étant choisie pour faciliter cette insertion.

## Patentansprüche

1. Verbundverglasung bzw. Verbundglas bzw. Verbundglasscheibe umfassend eine Gesamtheit bzw. einen Satz von zumindest einem harten transparenten Blatt bzw. einer harten transparenten Schicht bzw. Lage (3, 4) und zumindest einem Zwischenblatt bzw. einer Zwischenschicht bzw. -lage (5), welche durch Druck verformbar ist, in welcher ein oder mehrere Kompressionskufen bzw. -backen bzw. -schienen (6) lokal angeordnet sind an Stellen bzw. Orten bzw. Plätzen der Verglasung, welche einem Druck in der Richtung der Dicke unterzogen werden sollen, wobei die Kompressionskufe oder -kufen mit einer Dicke, welche im wesentlichen gleich ist zu derjenigen, welche für die Zwischenschicht (5) nach dem Zusammenbau er- bzw. beibehalten werden soll, aus einem Material ist bzw. sind, welches widerstandsfähiger bezüglich der Kompression ist als dasjenige der Zwischenschicht

2. Verbundverglasung gemäß Anspruch 1 umfassend zwei transparente harte Schichten (3, 4), welche mittels der Zwischenschicht (5) zusammengebaut bzw. zusammengehalten werden, wobei die Kompressionskufe oder -kufen von einer Dicke ist oder sind, welche im wesentlichen gleich ist zu der Entfernung bzw. dem Abstand, welcher zwischen den zwei harten Schichten er- bzw. beibehalten werden soll, nachdem diese mittels der Zwischenschicht zusammengebaut worden sind.

3. Verbundverglasung gemäß Anspruch 1 oder 2, in welcher die Kompressionskufe(n) (6) eine geringere Härte aufweist (aufirveisen) als die der transparenten harten Schichten (3, 4).

4. Verbundverglasung gemäß einem der vorhergehenden Ansprüche, in welcher die transparenten Schichte(n) (3, 4) Glasschichten sind und die Kompressionskufe(n) eine Vickers-Härte oder Brinell-Härte von 600 bis 800 aufweist (aufweisen).

5. Verbundverglasung gemäß einem der Ansprüche 2 bis 4, in welcher die Zwischenschicht (5) eine Schicht aus Polyvinylbutyral (PVB) ist.

6. Verbundverglasung gemäß einem der vorhergehenden Ansprüche, welche vorgesehen ist, um ein bewegliches Fenster eines Fahrzeugs auszubilden, in welchem die Kompression in der Dicke aus der Befestigung an dem Rand bzw. der Kante des Fensters resultiert durch Mittel (9) mittels welcher die Führung des Fensters gesichert wird.

7. Verbundverglasung gemäß Anspruch 6, in welcher die Kompressionskufe(n) (6) angeordnet ist (sind) an dem Teil des beweglichen Fensters, welche nicht sichtbar ist, egal wie die Position des Fensters, ob angehoben oder abgesenkt, ist.

8. Verbundverglasung gemäß einem der vorhergehenden Ansprüche, in welcher die Kompressionskufen) (6) in einem Reservefieiraum (-freiräumen), welche in der Zwischenschicht (5) ausgebildet ist (sind), angeordnet ist (sind).

9. Verglasung gemäß einem der Ansprüche 1 bis 7, in welcher die Kompressionskufe(n) (6) in die Zwischenschicht (5) während des Zusammenbauvorgangs der Verbundverglasung eingeführt wird (werden), wobei die Form der Kufe(n) derart ausgewählt ist, um dieses Einführen zu erleichtern.

## Claims

1. Laminated glazing comprising a unit of at least one hard transparent sheet (3, 4) and at least one so-called insert sheet (5), said insert being deformable by compression, in which one or more spacers (6) are locally disposed at the locations of the glazing which are to be subjected to compression in the direction of the material thickness, said spacer or spacers having a thickness essentially equal to that to be maintained for the insert (5) after assembly and being composed of a material which is more resistant to compression than that of the insert.

2. Laminated glazing according to Claim 1 comprising two hard transparent sheets (3, 4) assembled by means of the insert sheet (5), the spacer or spacers having a thickness essentially equal to the distance to be maintained between the two hard sheets after these have been assembled by means of the insert.

3. Laminated glazing according to Claim 1 or 2, wherein the spacer or spacers (6) has/have a hardness which is less than that of the hard transparent sheet/sheets (3, 4).

4. Laminated glazing according to one of the preceding claims, wherein the transparent sheet/sheets is/are sheets of glass and the spacer or spacers have a Vickers or Brinell hardness of 600 to 800.

5. Laminated glazing according to one of Claims 2 to 4, wherein the insert (5) is a polyvinyl butyral (PVB) sheet.

6. Laminated glazing according to one of the preceding claims intended to form mobile glazing for a motor vehicle, wherein the compression in material thickness results from fastening means (9), through which the guidance of the glazing is assured, to the edge of the glazing.

7. Laminated glazing according to Claim 6, wherein the spacer or spacers (6) is/are confined to the portion of the mobile glazing which is not visible irrespective of whether the glazing is in raised or lowered position.

8. Laminated glazing according to one of the preceding claims, wherein the spacer or spacers (6) is/are disposed in a reserve space or one of the reserve spaces arranged in the insert (5).

9. Laminated glazing according to one of Claims 1 to 7, wherein the spacer or spacers (6) is/are inserted into the insert (5) during the assembly operation of the laminated glazing, the shape of this/these spacer/s being selected to facilitate this insertion.
